# DEMANDE DE BREVET EUROPEEN

(11) **EP 0 737 434 A1**
(43) Date de publication de la demande: **16.10.1996**
(21) Numéro de dépôt: 96420122.2
(22) Date de dépôt: 12.04.1996
(51) Int. Cl.: A47J 31/44

(54) **Machine à boisson chaude, en particulier machine à café, comportant un dispositif de réglage en hauteur de la distribution du café**

(30) Priorité: 14.04.1995 FR 9504889
(71) Demandeur: SEB S.A., F-69130 Ecully (FR)
(72) Inventeur: Charles, Patrick, 65290 Louey (FR); Jurado, Manuel, 64140 Lons (FR); Estaun, Alain, 65100 Lourdes (FR)

(57) **Abrégé**

- Machines à boisson chaude.
- L'invention concerne une machine à boisson chaude, en particulier machine à café, comportant un porte-filtre (1) associé à un organe de distribution (10) du café et à un dispositif de réglage en hauteur dudit organe (10).
- Conformément à l'invention, le dispositif de réglage en hauteur comprend l'organe de distribution (10) dont la position relative par rapport au porte-filtre (1) est réglable.
- Machines à café.

## Description

La présente invention se rapporte au domaine technique général des machines à boisson chaude, en particulier des machines à café, dans lesquelles la boisson chaude est obtenue par lixiviation, c'est-à-dire par passage d'eau chaude à travers une mouture de granulométrie définie.

La présente invention concerne une machine à boisson chaude, en particulier une machine à café, comportant un réservoir et des moyens de chauffe, ainsi qu'un porte-filtre associé à un organe de distribution du café et à un dispositif de réglage en hauteur dudit organe.

Il est déjà connu, notamment par le brevet US-A-3218956, de réaliser des machines à café comportant un organe de distribution du café dont la hauteur est réglable. Dans le brevet mentionné précédemment, la machine à café comporte un bâti principal comportant un réservoir disposé en partie haute, relié par une colonne de distribution d'eau à un porte-filtre situé en partie basse du bâti. Le porte-filtre comporte un organe de distribution de café réalisé sous la forme d'une ouverture logée dans le porte-filtre. L'ensemble du bâti est monté à coulissement vertical sur les montants d'une embase destinée à recevoir la ou les tasses de café. La hauteur de l'organe de distribution au dessus du réceptacle destiné à recevoir le café peut donc être réglée et adaptée à la hauteur du réceptacle par simple coulissement vertical de l'ensemble du bâti principal.

Un tel dispositif ne s'avère pas adapté aux exigences actuelles des consommateurs en raison notamment de son encombrement dans le sens vertical. Un tel appareil peut, par ailleurs, présenter un inconvénient en matière de stabilité générale.

Il a, par ailleurs, déjà été proposé dans la demande de brevet DE-A-4226151 de régler la distance séparant le récipient de récupération du café de l'organe de distribution en réglant la position du récipient. Dans cette demande de brevet, le récipient à café, en l'occurrence une tasse, repose sur une plaque mobile verticalement relativement à l'embase de la machine à café. Un tel dispositif s'avère complexe dans sa réalisation et limité dans sa possibilité de réglage de la course verticale.

L'objet de la présente invention se propose, par conséquent, de porter remède aux inconvénients énumérés précédemment, et à fournir une machine à boisson chaude, en particulier une machine à café, dans laquelle le dispositif de réglage en hauteur de l'organe de distribution du café est de conception particulièrement simple et pratique, et d'encombrement réduit.

Un autre objet de l'invention est de fournir une machine à boisson chaude dans laquelle le réglage en hauteur de l'organe de distribution s'effectue de manière particulièrement facile et à l'aide de moyens éprouvés.

Un autre objet de l'invention est de fournir une machine à boisson chaude dans laquelle l'organe de distribution du café peut occuper un grand nombre de positions verticales.

Les objets assignés à l'invention sont atteints à l'aide d'une machine à boisson chaude, en particulier machine à café, comportant un porte-filtre associé à un organe de distribution du café et à un dispositif de réglage en hauteur dudit organe caractérisée en ce que le dispositif de réglage en hauteur comprend l'organe de distribution dont la position relative par rapport au porte-filtre est réglable.

D'autres particularités et avantages de l'invention apparaîtront et ressortiront plus en détail à la lecture de la description faite ci-après, en référence aux dessins annexés, donnés à titre d'exemples illustratifs et non limitatifs dans lesquels :
- la figure 1 montre une vue générale d'une machine à café selon l'invention.
- la figure 2 montre selon une coupe transversale longitudinale latérale, une vue partielle d'une machine à boisson chaude conforme à l'invention montrant le dispositif de réglage en hauteur de l'organe de distribution.
- la figure 3 montre selon une vue transversale longitudinale frontale, une vue partielle d'une machine à boisson chaude conforme à l'invention comportant un dispositif de réglage en hauteur de l'organe de distribution.
- la figure 4 montre une vue identique à la figure 2, l'organe de distribution conforme à l'invention étant en position basse.
- les figures 5, 6 et 7 montrent des détails de réalisation, selon plusieurs variantes, de dispositifs de verrouillage-déverrouillage de la position de l'organe de distribution.

Dans la description qui suit, il sera fait référence à une machine à boisson chaude constituée d'une machine à café, étant entendu que l'objet de l'invention s'applique à toute machine à boisson chaude similaire, apte à assurer la réalisation d'une boisson chaude telle que par exemple du café, du thé à partir d'une mouture.

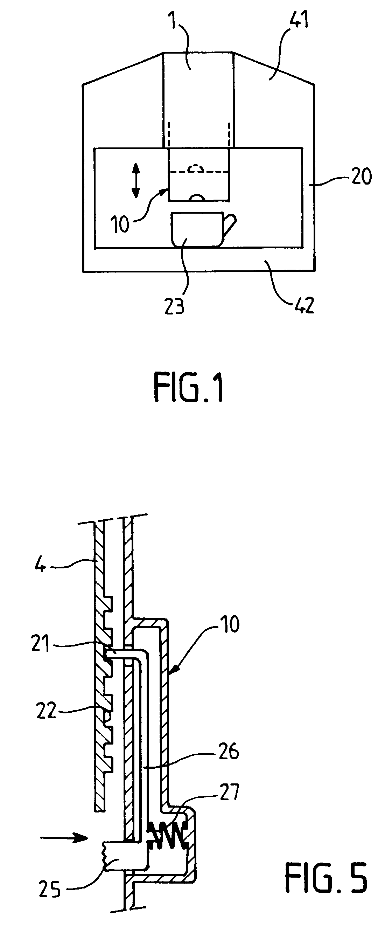

La machine à café conforme à l'invention montrée à la figure 1 comporte, comme cela est bien connu dans l'art antérieur, un bâti principal 20 incluant un réservoir d'eau 41 relié par un tube de montée d'eau à un élément de chauffe, par exemple une résistance blindée, puis à un tube de distribution d'eau débouchant au dessus d'un porte-filtre 1.
La machine à café comporte également une embase 42 destinée à recevoir et à servir de support à un récipient de récupération de café, tel qu'une verseuse ou une tasse 23.

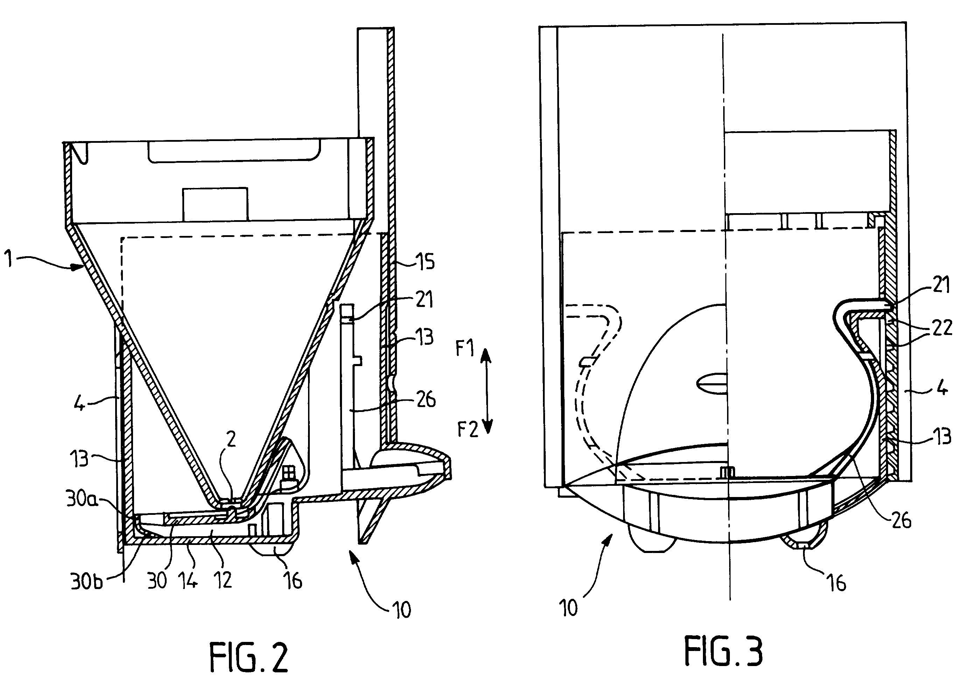

De manière classique, le porte-filtre 1 (fig. 2) est solidaire du corps principal de la machine à café, et se présente sous la forme d'une pièce monobloc tronconique. Le porte-filtre 1 est destiné à supporter un filtre papier dans lequel est versé la mouture. Le porte-filtre 1 comporte, dans son fond, au moins une perforation 2 assurant le passage du café à l'extérieur du porte-filtre 1.

Le porte-filtre 1 comporte extérieurement, et à partir des parois latérales 13, une jupe périphérique 4, l'entourant par exemple au moins partiellement.

La machine à café conforme à l'invention comporte un organe de distribution 10 apte à assurer la collecte et la répartition du café dans un récipient du genre verseuse ou tel que la tasse 23 disposée au droit de et sous l'orifice 2.

La machine à café conforme à l'invention comporte également un dispositif de réglage en hauteur de l'organe de distribution 10, de manière à adapter la position dudit organe à la hauteur du récipient de récupération du café. Selon l'invention, le dispositif de réglage en hauteur comprend l'organe de distribution 10 dont la position relative par rapport au porte-filtre 1 est réglable. A cette fin, selon une caractéristique importante de l'invention, l'organe de distribution 10 est solidaire d'une chambre de réception 12 disposée sous le porte-filtre 1 et montée mobile et réglable en hauteur sur ce dernier. L'organe de distribution 10 se présente ainsi sous la forme d'une chambre délimitée par des parois latérales 13, et par une paroi de fond 14 par la chambre de réception 12 est montée à coulissement vertical dans le porte-filtre 1, de préférence à l'intérieur de ce dernier entre la jupe périphérique 4 et une paroi 15 du bâti principal 20 par l'intermédiaire des parois latérales 13. Le coulissement vertical selon les directions F1 et F2 permet en conséquence d'adapter la hauteur de l'organe de distribution 10 à la verseuse ou la tasse, quelle que soit sa hauteur. La paroi de fond 14 comporte au moins un orifice 16 ménagé à travers son épaisseur pour assurer la distribution du café dans la verseuse ou la tasse préalablement disposées au dessous et au droit dudit orifice 16.

Selon une version particulièrement avantageuse de l'invention, la chambre de réception 12 est apte à occuper plusieurs positions verticales fixes par rapport au porte-filtre 1, par l'intermédiaire de moyens de blocage 21, 22 (figure 3) et d'un organe de commande 25. Avantageusement, les moyens de blocage comprennent un ensemble d'ergots 21 et de crémaillères 22, préférentiellement réalisés respectivement à partir de l'organe de distribution 10 et dans la jupe périphérique 4, et/ou dans la paroi 15.

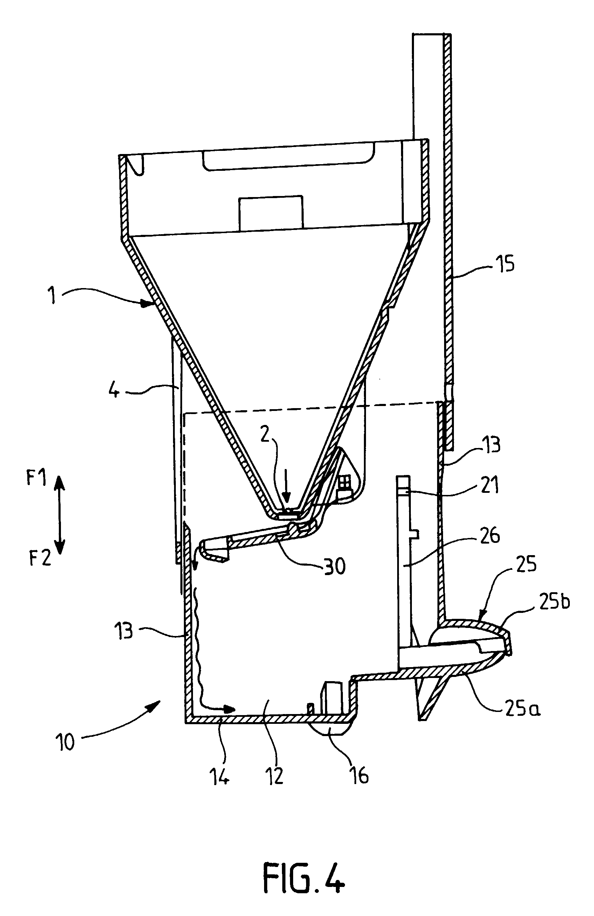

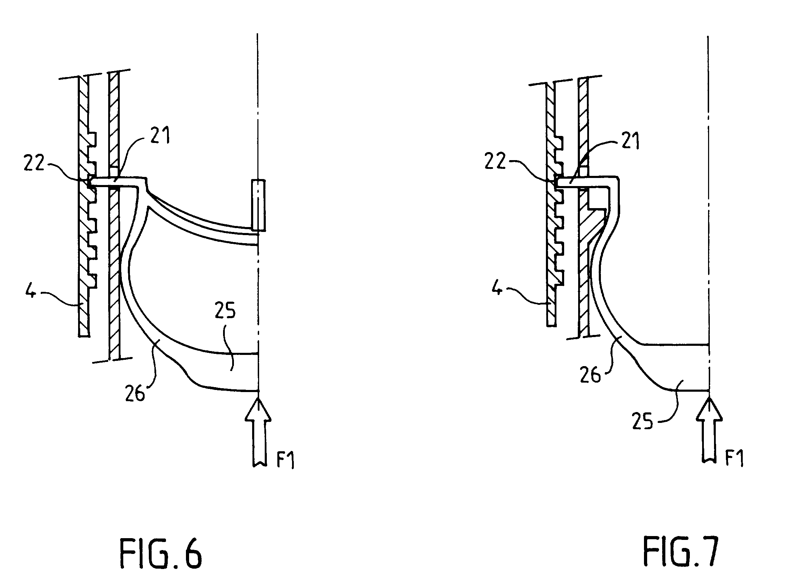

L'organe de commande 25 peut comporter un poussoir 25a solidaire de l'organe de distribution 10 et apte à être actionné par l'utilisateur par pression pour libérer un verrou 26, supportant un ou plusieurs ergots 21, et assurant leur déformation par exemple leur rétractation hors de leur logement formé par les crémaillères 22 (figure 5). Dans la variante montrée aux figures 2 et 4, l'organe de commande 25 est formé par une pièce inférieure 25a mobile sur une faible course relativement à une pièce supérieure 25b, ladite pièce étant solidaire du verrou 26. Le pincement des deux pièces 25a, 25b, assure le déplacement du verrou 26 et permet un coulissement vertical de l'organe de distribution 10, les ergots 21 coopérant avec les crémaillères 22 à des niveaux de hauteur différents.

La figure 6 montre une variante de réalisation du dispositif de verrouillage-déverrouillage du verrou 26 dans laquelle ce dernier se déforme par flexion sous l'action du pincement effectué selon la flèche F1 ce qui permet à l'ergot 21 de sortir hors de la crémaillère 22. L'extraction de l'ergot 21 hors de la crémaillère 22 peut être facilitée en prévoyant une rampe 26a (Fig. 7) servant à accentuer la flexion du verrou 26, lors du pincement de l'organe 25.
A titre de variante, l'organe de commande 25 peut être maintenu en position de repos élastique par interposition d'un ressort 27 (fig. 5) entre l'organe de distribution 10 et le verrou 26.

Avantageusement, la machine à café selon l'invention comporte un moyen anti-goutte 30 (figure 4) apte à être actionné en position de fermeture lorsque l'organe de distribution 10 occupe sa position de butée haute relativement au porte-filtre 1 montré à la figure 2. Selon un mode de réalisation préférentiel, le moyen anti-goutte 30 est solidaire du porte-filtre 1. Selon cette variante, le moyen anti-goutte 30 est solidaire à rotation de la paroi latérale du porte-filtre 1 et vient assurer la fermeture de l'orifice 2 lorsque l'organe de distribution 10 occupe sa position de butée haute, la paroi de fond 14 venant buter contre le moyen anti-goutte 30 pour l'appliquer contre l'orifice 2. Le moyen anti-goutte 30 est formé par une plaque inclinée vers le bas en position stable d'ouverture et s'étendant jusqu'au voisinage de la paroi latérale 13.

La plaque inclinée est pourvue d'un moyen de guidage du café, par exemple au moins une rigole, pour assurer le guidage du liquide vers le bord extrême 30a de la plaque.

Cette disposition permet au café de s'écouler le long de la paroi latérale 13 selon un flux laminaire évitant la formation de gouttelettes au niveau de la zone d'impact lorsque le liquide tombe sur la plaque de fond 14.

La partie inférieure du bord extrême 30a est avantageusement pourvue d'une languette 30b servant de butée lorsque l'organe de distribution 10 vient en position haute.

A titre de variante, il est également possible de monter et fixer le moyen anti-goutte 30 sur l'organe de distribution 10.

Le fonctionnement de la machine à café selon l'invention est le suivant.

Lorsque l'utilisateur décide de placer une tasse à café d'une hauteur déterminée sous le porte-filtre 1, il doit d'abord régler la hauteur relative de l'organe de distribution 10 par rapport au porte-filtre 1, de manière à pouvoir insérer la tasse dans l'espace disponible entre l'orifice 16 et le corps de la machine à café ou le support horizontal sur laquelle repose la machine. A cette fin, il appuie sur l'organe de commande 25 par pression de manière à libérer les ergots 21 de leur position fixe dans la crémaillère 22 qui lui est associée. Ensuite, il procède au réglage en hauteur de l'organe de distribution 10 en faisant coulisser verticalement, selon les flèches F1 ou F2, la tête de distribution 10 jusqu'à obtenir la position verticale fixe souhaitée correspondant au blocage des ergots 21 dans des crémaillères 22. Lorsque la tasse est insérée sous et au droit de l'orifice 16, la machine à café peut être mise en marche. Le café peut alors s'écouler par l'intermédiaire de la perforation 2 au préalable dégagée par le moyen anti-goutte 30. Le café peut alors s'écouler sur le moyen anti-goutte qui forme un plan incliné pour atteindre la paroi inférieure 14. Le café s'écoule ensuite dans la tasse par passage à travers l'orifice 16.

Le dispositif de réglage en hauteur conforme à l'invention présente un encombrement réduit dans la mesure où l'organe de distribution 10 se déplace de manière télescopique dans le prolongement du porte-filtre 1. Son utilisation s'avère également particulièrement simple, sa conception mettant en oeuvre un minimum de pièces.

## Revendications

1. Machine à boisson chaude, en particulier machine à café, comportant un porte-filtre (1) associé à un organe de distribution (10) du café et à un dispositif de réglage en hauteur dudit organe (10) caractérisée en ce que le dispositif de réglage en hauteur comprend l'organe de distribution (10) dont la position relative par rapport au porte-filtre (1) est réglable.

2. Machine à boisson chaude selon la revendication 1 caractérisée en ce que l'organe de distribution (10) est solidaire d'une chambre de réception (12) du café disposée sous le porte-filtre (1).

3. Machine à boisson chaude selon la revendication 2 caractérisée en ce que la chambre de réception (12) est montée mobile et réglable en hauteur sur le porte-filtre (1).

4. Machine à boisson chaude selon la revendication 3 caractérisée en ce que la chambre de réception (12) est montée à coulissement vertical dans le porte-filtre (1), de préférence à l'intérieur de ce dernier.

5. Machine à boisson chaude selon la revendication 4 caractérisée en ce que la chambre de réception (12) est apte à occuper plusieurs positions verticales fixes par l'intermédiaire de moyens de blocage (21,22) et d'un organe de commande (25).

6. Machine à boisson chaude selon la revendication 5 caractérisée en ce que les moyens de blocage comprennent un ensemble d'ergots (21) et de crémaillères (22) aptes à coopérer, l'organe de commande comprenant un poussoir (25) apte à libérer un verrou (26).

7. Machine à boisson chaude selon l'un des revendications 2 à 6 caractérisée en ce que l'organe de distribution (10) est formé par au moins un orifice (16) ménagé dans le fond de la chambre de réception.

8. Machine à boisson chaude selon l'une des revendications 1 à 7 caractérisée en ce qu'elle comporte un moyen anti-goutte (30) apte à être actionné en position de fermeture lorsque la chambre de réception (12) occupe sa position de butée haute relativement au porte-filtre (1).

9. Machine à boisson chaude selon la revendication 8 caractérisée en ce que le moyen anti-goutte (30) est solidaire du porte-filtre (1) et forme en position d'ouverture un plan incliné s'étendant jusqu'au voisinage des parois latérales (13) de l'organe de distribution (10).

10. Machine à boisson chaude selon les revendications 8 ou 9 caractérisée en ce que le moyen anti-goutte (30) est actionné en position de fermeture par l'organe de distribution (10) lorsque ce dernier est en position haute de butée.
